(19) **Europäisches Patentamt / European Patent Office / Office européen des brevets**

(11) **EP 1 739 658 B1**

(12) **EUROPEAN PATENT SPECIFICATION**

(45) Date of publication and mention
of the grant of the patent:
**24.03.2010 Bulletin 2010/12**

(51) Int Cl.:
***G10L 21/02*** *(2006.01)*

(21) Application number: **06013032.5**

(22) Date of filing: **23.06.2006**

(54) **Frequency extension of harmonic signals**

Frequenzerweiterung von harmonischen Signalen

Extension fréquentielle de signaux harmoniques

(84) Designated Contracting States:
**DE FR GB IT**

(30) Priority: **28.06.2005 US 168654**

(43) Date of publication of application:
**03.01.2007 Bulletin 2007/01**

(73) Proprietor: **QNX Software Systems (Wavemakers), Inc.**
**Vancouver BC V6B 2K4 (CA)**

(72) Inventors:
• **Giesbrecht, David**
**Toronto, Ontario**
**M6R 2G6 (CA)**

• **Hetherington, Phillip**
**Port Moody, British Columbia**
**V3H 5H7 (CA)**
• **Li, Xueman**
**Burnaby, British Columbia**
**V5C 2B4 (CA)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**EP-A- 0 497 050** **EP-A- 0 706 299**
**WO-A-01/18960** **WO-A-98/06090**
**US-A1- 2003 050 786** **US-B1- 6 504 935**

**Description**

**BACKGROUND OF THE INVENTION**

**1. TECHNICAL FIELD.**

A system and methods for extending the frequency bandwidth of harmonic signals are provided.

**2. PRIOR ART**

All communication systems, especially wireless communication systems, suffer bandwidth limitations. The quality and intelligibility of speech signals transmitted in such systems must be balanced against the limited bandwidth available to the system. In wireless telephone networks, for example, the bandwidth is typically set according to the minimum bandwidth necessary for successful communication. The lowest frequency important to understanding a vowel is about 200 Hz and the highest frequency vowel formant is about 3,000 Hz. Most consonants however are broadband, usually having energies in frequencies below about 3,400 Hz. Accordingly, most wireless speech communication systems are optimized to pass between 300 and 3,400 Hz.

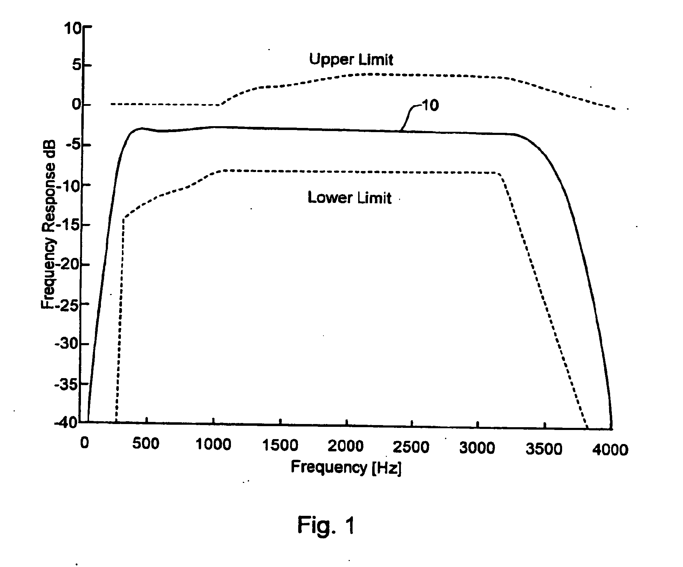

A typical passband 10 for a speech communication system is shown in Fig. 1. In general, passband 10 is adequate for delivering speech signals that are both intelligible and are a reasonable facsimile of a person's speaking voice. Nonetheless, much speech information contained in higher frequencies outside the passband 10 is lost due to bandpass filtering. This can have a detrimental impact on both intelligibility and quality in environments where significant amounts of noise are present.

In many cases, the quality of band-limited signals can be improved by reintroducing the harmonic components of signals that have been lost because they lie outside of the system's passband. In some systems, such as that disclosed in a co-pending U.S. Patent Application Serial No. 11/110,556, entitled "System for Improving Speech Quality and Intelligibility," higher frequency components of speech signals are transposed or compressed into lower frequency ranges that are within the system's passband. In this case the compressed speech signals retain much of the information from the higher frequency ranges that are outside the passband and which would otherwise be lost if the signal were not compressed. This step alone significantly improves the quality and intelligibility of band-limited speech signals. Nonetheless, such frequency compressed signals experience further significant quality and intelligibility improvements if they are re-expanded after they have been transmitted over the narrowband communication channel and harmonics have been reintroduced at higher frequencies.

Presently, several techniques exist for extending the frequency range of harmonic signals for both speech and music. In many cases extending the harmonic signal content may be described as "excitation signal generation." These techniques can be broadly grouped into two categories: frequency shifting methods; and nonlinear distortion methods.

Frequency shifting methods involve some form of spectral copying, transposition, or folding, in order to introduce a replica of lower frequency harmonics at higher frequencies. Many of these methods use a fixed copying scheme, which can result in the improper placement of the high-frequency harmonics. In many cases, the re-introduced high frequency harmonics will not be placed accurately at each multiple of the fundamental pitch frequency. Some spectral copying methods use a pitch estimate to insure the proper placement of transposed harmonics. However, performance of these methods can become severely degraded if the pitch estimate is inaccurate. This is often the case with signals having a low SNR.

The second category of harmonic extension methods involves creating harmonic distortion so that harmonics are introduced across the full frequency spectrum. These methods employ a time domain non-linear transformation such as a squared function $x^2(n)$, cubic function $x^3(n)$, or full-wave rectification $|x(n)|$, to introduce harmonic distortion. These methods are usually followed by spectral envelope estimation techniques, such as linear prediction, which are used to ensure that the final wideband excitation signal is spectrally flat.

The main advantage of non-linear transformation methods over spectral copying or folding methods is that harmonics are generated at multiples of the fundamental frequency without requiring the use of a pitch estimation algorithm. However, the main disadvantage of these techniques is that the new harmonics can contain aliasing artifacts in the higher frequencies. Also, because it is a time domain approach, it is difficult to control the bandwidth of the generated harmonics. New harmonics are generated across all frequencies instead of only the frequency range of interest.

EP 0 497 050 A1 discloses a PCM digital audio signal playback apparatus. US 6 504 935 B1 discloses a method and apparatus for the modeling and synthesis of harmonic distortions. The International Patent Application WO 01/18960 A describes a digital filter design. US 2003/050786 A1 describes a method and apparatus for synthetic widening of the bandwidth of voice signals. WO 98/06090 A discloses a method for encoding a speech and/or audio signal in view of enhancing perceptual quality, the time-domain speech and/or audio signal is broken down into a succession of overlapping finite-duration speech and/or audio signal segments, and a first linear transform is applied to each of these speech and/or audio signal segments to obtain short-term spectral components. Then, a non-linear transform is applied to the short-term spectral components in order to produce warped spectral components. A second linear transform is applied to the warped spectral components to obtain a time-domain signal interval.

## SUMMARY

A system and a method according to claims 1 and 8, respectively, are provided for extending the harmonics of band limited harmonic signals. Harmonic content of a band-limited harmonic signal is extended to frequencies outside the signal's passband by performing a non-linear transformation on the complex spectrum of the band limited signal in the frequency domain. This non-linear transformation may be accomplished by a linear convolution of the complex spectrum with itself. A system for extending the frequency bandwidth of a harmonic signal includes a signal processor with a forward transform module for transforming a time domain signal into the frequency domain, a non-linear transform module for performing the non-linear transformation on the complex spectrum of the harmonic signal, and a reverse transform module for transforming the extended spectrum of the harmonic signal back into the time domain. In many applications, it may be desirable to combine the original band-limited signal with all or some spectral portion of the spectrally-extended harmonic signal (e.g. to obtain a final speech or music signal with improved quality or intelligibility). This can be accomplished using a variety of techniques as described in the co-pending U.S. Patent Application Serial No. 11/110,556, entitled "System for Improving Speech Quality and Intelligibility".

According to an embodiment of the invention a method of extending the harmonics of a band-limited harmonic signal is provided. The method calls for transforming the band-limited harmonic signal from the time domain into the frequency domain. The transformation produces a complex spectrum of the band-limited harmonic signal. Once the complex spectrum has been obtained, a non-linear transformation is performed on the complex spectrum. The non-linear transformation may include a linear convolution of the complex spectrum with itself. The non-linear transformation extends the harmonic content of the complex spectrum to frequencies outside the limited frequency band of the original band-limited harmonic signal. Finally, an inverse transform is performed on the extended complex spectrum, transforming the complex spectrum back into the time domain.

According to another embodiment, a harmonic extension method is provided. This method includes receiving a band-limited harmonic signal. By definition, the band-limited harmonic signal includes significant signal energies at regular frequency intervals within the limited frequency band of the band-limited signal. The signal's pass band is defined by a passband lower frequency limit and a passband upper frequency limit. The band-limited harmonic signal is transformed from the time domain into the frequency domain. The time domain to frequency domain transform produces a complex spectrum representing the frequency content of the received signal. In order to add harmonic content to frequencies outside the narrow frequency band of the original signal, a non-linear transformation is performed on the complex spectrum of the received band-limited harmonic signal. The harmonically extended spectrum is then transformed back into the time domain.

A system for extending the harmonics of a band limited harmonic signal is also provided. The system includes a device for receiving a band-limited harmonic signal, such as microphone, a wireless telephone hand set, an audio system, or any other device or system capable of receiving an harmonic signal. The system further includes a signal processor for processing a signal received by the receiving device. The signal processor includes a forward transform module for transforming the received band-limited harmonic signal from the time domain into the frequency domain. The forward transform module generates a complex spectrum representing the frequency content of the band-limited signal. A non-linear transformation module is provided by the signal processor for performing a non-linear transformation of the complex spectrum of the band-limited signal in the frequency domain. The non-linear transformation creates an extended spectrum that includes harmonics at frequencies outside the original frequency band of the received signal. Finally, the signal processor includes a reverse transform module for transforming the harmonically extended spectrum of the band-limited harmonic signal back into the time domain.

Other systems, methods, features and advantages of the invention will be, or will become, apparent to one with skill in the art upon examination of the following figures and detailed description. It is intended that all such additional systems, methods, features and advantages be included within this description, be within the scope of the invention, and be protected by the following claims.

## BRIEF DESCRIPTION OF THE DRAWINGS

FIG. 1 shows a typical passband for a telephone system.

FIG. 2 shows a spectrum of a band-limited harmonic signal.

FIG. 3 shows a spectrum of the band-limited harmonic signal of FIG. 2 after the signal has been squared in the time domain.

FIG. 4 shows a spectrum of the band-limited harmonic signal of FIG. 2 after a non-linear transformation in the frequency domain.

FIG. 5 shows a spectrum of a band-limited harmonic signal absent a low frequency harmonic peak due to the passband for a typical telephone system.

FIG. 6 shows a spectrum of the band-limited harmonic signal of FIG. 5 having a harmonic peak extended into the low frequency range.

FIG. 7 shows two extended spectra for the band-limited harmonic signal of FIG. 5, the first after full linear convolution of the entire complex spectrum with itself, the second after linear convolution of the complex spectrum with only a portion of itself.

FIG. 8 shows a frequency spectrum of a harmonic signal which has been corrupted by noise.

FIG. 9 shows two frequency spectrums, the first corresponding to the linear convolution of the corrupted harmonic spectrum of FIG. 7 with itself and the second corresponding to a weighted convolution.

FIG. 10 shows the spectrum of a band-limited harmonic signal wherein some of the harmonic peaks have been masked by background noise.

FIG. 11 shows the spectrum of FIG. 10 after an SNR-weighted convolution operation.

FIG. 12 is a flowchart of a method of extending the harmonics of a band-limited harmonic signal.

FIG. 13 is a block diagram ofa system for extending the harmonics of a band-limited harmonic signal.

FIG. 14 is a block diagram of a system for extending the harmonics and spectral envelope of a band-limited harmonic signal and combining the extended signal with the original hand-limited signal.

## DETAILED DESCRIPTION OF THE PREFERRED EMBODIMENTS

The present invention relates to a system and methods for extending the frequency bandwidth of harmonic signals. The system and methods may be employed to reintroduce both high and low frequency harmonics of band-limited signals, as well as restore mid-band harmonics that may have been masked by background noise. The system and methods for extending the frequency bandwidth of harmonic signals may be advantageously employed to enhance the quality or intelligibility of harmonic signals such as speech or music signals. Further, the system and methods may provide an optimal mechanism for extending the bandwidth of compressed signals according to the co-pending patent application entitled "System For Improving Speech Quality and Intelligibility," as mentioned in the Background section.

The present system and methods for extending the bandwidth of harmonic signals operate in a manner similar to the method described in the Background section of introducing harmonics by creating harmonic distortion in the time domain. However, whereas past efforts of introducing or reintroducing harmonic content through harmonic distortion rely on a non-linear transformation of the band-limited signal in the time domain, the system and methods disclosed herein rely on a transformation of the band-limited signal in the frequency domain instead. As noted in the background of the invention, a non-linear transformation in the time domain may be accomplished by squaring the original time domain signal x(n) as represented by the equation.

$$y(n) = x^2(n) \tag{1}$$

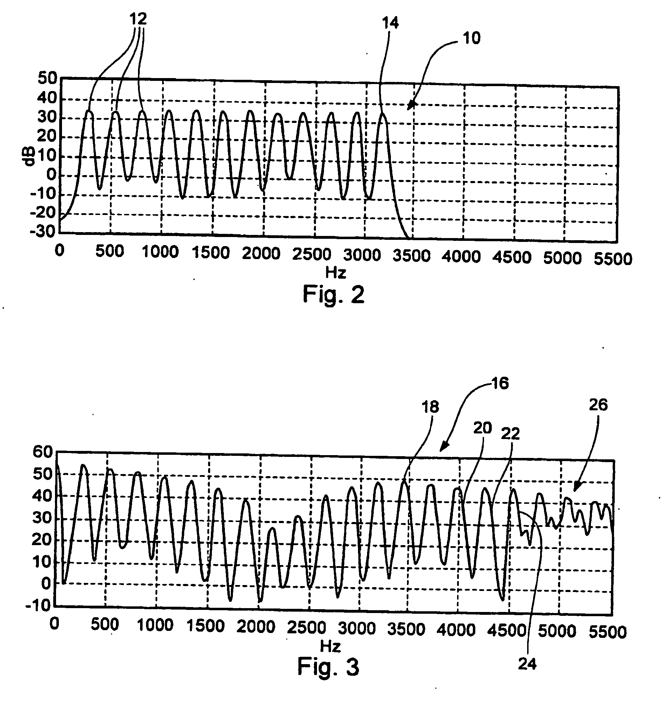

where $n$ denotes the time index and $y$ is the transformed output signal which includes the harmonic distortion that produces harmonics at a wider bandwidth. Squaring the time sampled signal in the time domain is equivalent to performing circular or cyclic convolution of the signal's complex spectrum with itself in the frequency domain. However, circular convolution in the frequency domain suffers from the same defects as squaring the time domain signal, namely aliasing artifacts as shown in FIG. 3. By using linear convolution to convolve the complex spectrum of the signal with itself rather than circular convolution, the aliasing artifacts are eliminated. Thus, the present system and methods for extending the frequency bandwidth of harmonic signals employ linear convolution to convolve the frequency domain complex spectrum of the harmonic signal with itself. The linear convolution operation may be expressed as

$$Y(k) = X(k) * X(k) \qquad k = 0 \dots \frac{N}{2} \tag{2}$$

where * denotes a linear convolution operation, $k$ is the frequency index, and $N$ is the length of the FFT employed to transform the time domain signal into the frequency domain. Note that the Figures showing frequency spectra in this document were generated using a digital signal sampled at 11 kHz transformed using a 256-pt FFT on hanning-windowed time segments, with 50% overlap. Other sampling rates, windowing functions or FFT sizes may also be used for this invention.

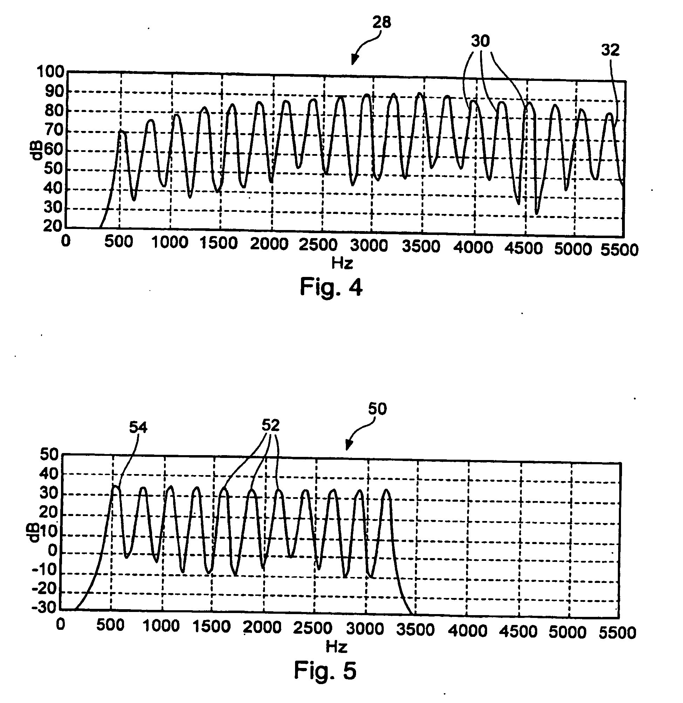

FIG. 4 shows a spectrum 28 that results from linearly convolving the spectrum 10 of a band-limited harmonic signal shown in FIG. 1 with itself. The creation of additional higher frequency harmonics is clearly evident. The spectrum 10 of the band-limited signal is limited to twelve harmonic peaks, such as peaks 12, with the highest frequency harmonic peak 14 occurring at approximately 3200 Hz. The harmonically expanded spectrum 28 in FIG. 4, however, includes eight extended harmonic peaks 30 in the frequency range between 3500 and 5500 Hz, with the highest frequency harmonic 32 located at approximately 5300 Hz.

It is also clear that the aliasing artifacts 26 which are prevalent in the higher frequencies of the spectrum 16 when a non-linear transform is performed in the time domain are not present in the spectrum 28 resulting from a linear convolution in the frequency domain. An additional advantage of performing linear convolution of the complex spectrum of the harmonic signal with itself in the frequency domain is that it is easier to control the bandwidth of the generated harmonics. For example, in Figure 3 adding non-linear distortion to a harmonic signal in the time domain creates harmonics across all frequencies. However, employing linear convolution in the frequency domain as described herein, the filtered output *Y(k)* (Eq. 2) need only be calculated for frequency points k where harmonic extension of the signal is desired. For example, if it is desirable to only generate harmonics above 3400 Hz then the filtered output *Y(k)* need only be calculated for frequencies greater than 3400 Hz.

In the preceding example, the harmonic range of the spectrum 10 of the original band-limited signal was extended from approximately 3500 Hz to 5,500 Hz. Performing a non-linear transformation in the frequency domain may also be used to extend harmonics from higher frequency ranges to lower frequency ranges, although a slightly different approach must be employed. In order to introduce harmonics in frequencies below the frequencies of the harmonics of the original band-limited signal, the mirrored complex conjugate of the original complex spectrum of the band-limited signal is used. The original complex spectrum of the band-limited signal is convolved with a mirrored complex conjugate version of itself. This operation may be expressed mathematically as

$$Y'(k) = X(k) * conj\left(X\left(\frac{N}{2} - k\right)\right) \qquad k = 0...\frac{N}{2}, \qquad (3)$$

where conj represents the complex conjugate of the complex spectrum. The final output *Y(k)*, the spectrum including lower frequency harmonics, is obtained by again mirroring and taking the complex conjugate of the result of the linear convolution *Y'(k)*. This may be expressed as

$$Y(k) = conj\left(Y'\left(\frac{N}{2} - k\right)\right) \qquad k = 0...\frac{N}{2}. \qquad (4)$$

As was the case when extending harmonics to higher frequencies, the filtered output *Y(k)* need only be calculated for points k where harmonic extension of the signal are desired.

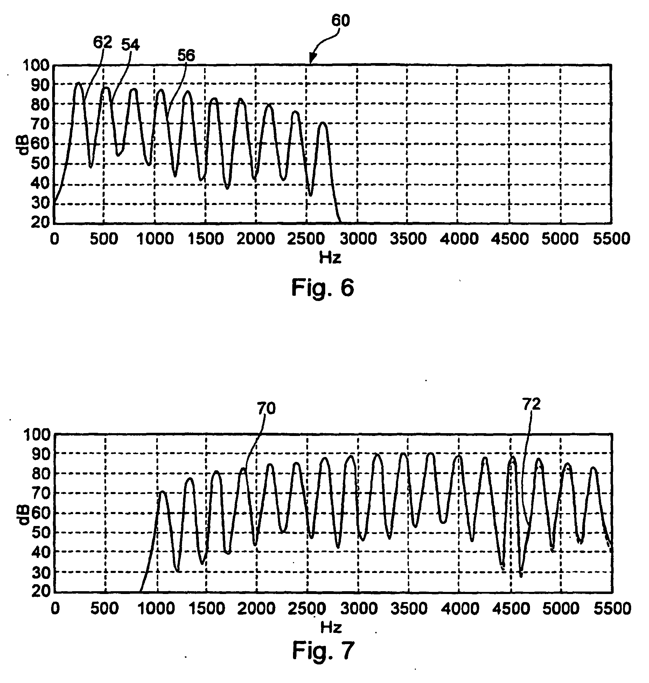

FIG. 5 shows the spectrum 50 of a band-limited harmonic signal. The spectrum 50 is characterized by a plurality of harmonic peaks 52, the lowest harmonic peak 54 located at approximately 500 Hz. FIG. 6 shows a frequency spectrum 60 which results from linearly convolving the original spectrum 50 of FIG.5 with the mirrored complex conjugate of itself as described above. An additional harmonic peak 62 is clearly visible at approximately 250 Hz, thus confirming that linear convolution of the original spectrum with the mirrored complex conjugate of itself operates to extend harmonics into lower frequency ranges.

Using the system and methods of extending harmonic information in band-limited signals discussed herein, it may be desirable to linearly convolve only portions of the original complex spectrum with itself. For example, for phone-band speech signals, the most significant harmonic energies are usually contained within the frequency range between 0-2.5 KHz. Therefore, in order to reduce the computational load on the system, it may be desirable to use only the portion of the original complex spectrum for the convolution where most of the harmonic energy resides. The linear convolution equation (2) described above may be altered as

$$Y(k) = X(k_1) * X(k_2) \qquad \begin{array}{l} k_1 = 0...M_1 \\ k_2 = 0...M_2 \end{array} \qquad (5)$$

where $M_1, M_2 < \dfrac{N}{2}$. Limiting the portions of the complex spectrum which are used in performing the linear convolution may also be effective when a portion of the original harmonic signal has been corrupted by noise. Generation of additional harmonics may be more effective when portions of the spectrum having the low signal-to-noise ratio (SNR) are excluded from the linear convolution.

FIG. 7 shows two substantially similar spectrums 70, 72. Both spectrums 70, 72 were produced using Equation (5). For the solid line spectrum the values $M_1$ and $M_2$ were selected such that $M_1 = M_2 = {}^N/_2$. In this case, Equation (5) reduces to Equation (2), and the solid line spectrum 70 represents the entire original spectrum 50 linearly convolved with itself. For the dashed line spectrum 72, however, the values for $M_1$ and $M_2$ were selected such that $M_1 = {}^N/_2$ and $M_2 = {}^N/_4$. This amounts to the original complex spectrum being linearly convolved with only ½ of itself. Nonetheless, the dashed line spectrum 72 only varies from the solid line spectrum 70 by an insignificant amount. Thus, reducing the complex filter coefficients as described, reduces the computational load, and generates an extended harmonic spectrum wherein the strength of the generated harmonics is not significantly affected.

As mentioned above, excluding a portion of the original complex spectrum from the linear convolution may be beneficial where portions of the original signal are corrupted by noise. Another alternative for excluding low SNR portions of the spectrum is to use a weighted convolution approach. In some cases it may be advantageous to exclude or suppress portions of a spectrum prior to performing the linear convolution. This may be accomplished by multiplying the spectrum by one or more weighting factors before performing the convolution. In this case, Equation (4) may be re-written as

$$Y(k) = [G_1(k_1) X(k_1)] * [G_2(k_2) X(k_2)] \qquad \begin{aligned} k_1 &= 0 \ldots M_1 \\ k_2 &= 0 \ldots M_2 \end{aligned} \qquad (6)$$

where $M_1$, $M_2 < {}^N/_2$ and $G_1$ and $G_2$ are weighting factor vectors. Appropriate values for $G_1$ and $G_2$ may be for example between 0 and 1. In a particular implementation for suppressing background noise and generating extended harmonics in a speech signal corrupted by background noise, $G_1$ and $G_2$ may correspond to Weiner filter coefficients estimated from SNR characteristics of the original spectrum of the input speech signal.

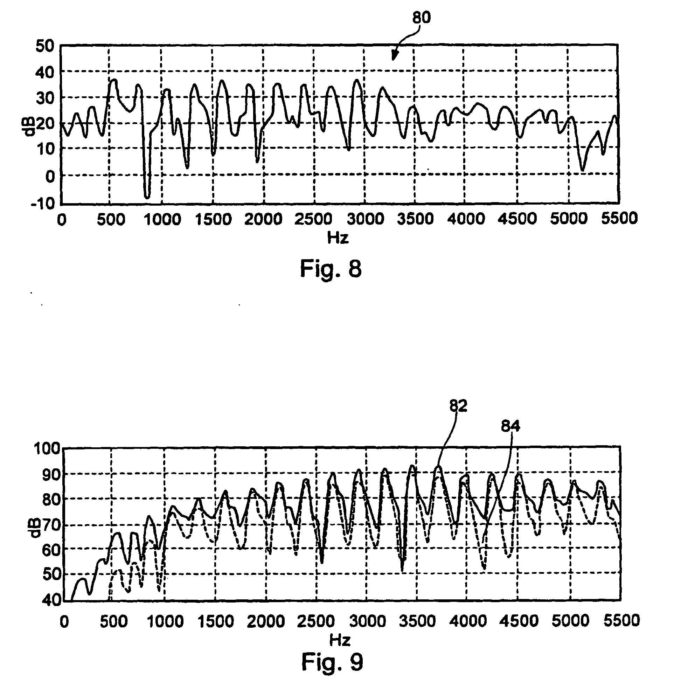

FIG. 8 shows the spectrum 80 of a band-limited harmonic signal corrupted by white noise. FIG. 9 shows two spectrums 82, 84 that result from convolving the spectrum 80 with itself according to Equation (6). The first, solid line spectrum 82 corresponds to weighting factors $G_1$, $G_2 = 1$, in other words no weighting. The second dashed line spectrum 84 corresponds to weighting factors $G_1$, $G_2$ which are SNR weighted using Weiner filter coefficients (max. noise attenuation of 12 dB). The spectrum 84 produced from the SNR weighted convolution procedure, includes much deeper valleys between the harmonic peaks, indicating harmonics that are more clearly defined and less corrupted by noise.

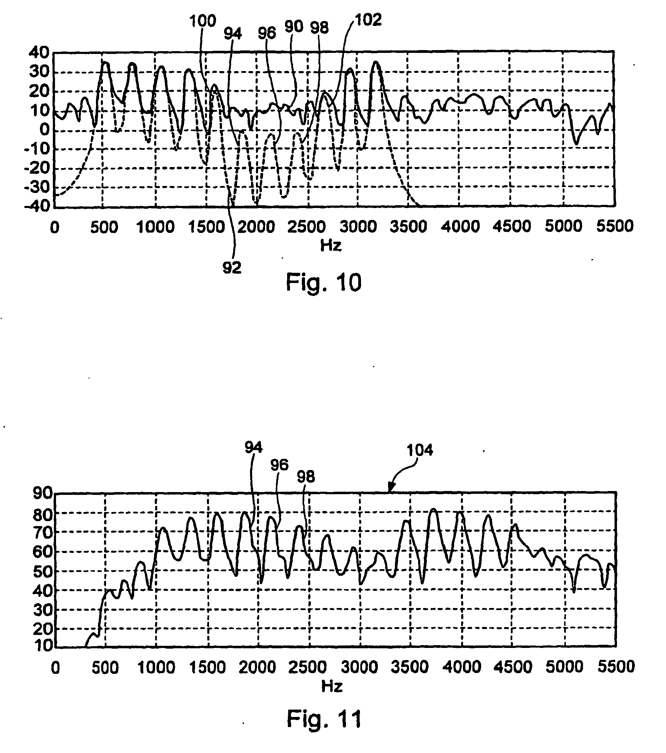

The weighted convolution procedure embodied in Equation (6) may also be employed to recover or enhance in-band harmonics that have been completely or partially masked by noise. For example FIG. 10 shows a frequency spectrum 90 which has been corrupted by noise. FIG. 10 also shows the original uncorrupted spectrum 92 as a dashed line. Comparing the noise corrupted spectrum 90 with the original harmonic signal spectrum 92, it is clear that harmonic peaks 94, 96 98 are completely masked by the background noise, and harmonic peaks 100, 102 are barely discernable. Applying the SNR-weighted convolution operation described above results in the frequency spectrum 104 shown in FIG. 11. In the spectrum 104 the masked harmonic peaks have been restored, and additional harmonics have been generated at frequencies above 3.4 kHz. Furthermore, as described in the co-pending U.S. Patent Application Serial No. 11/110,556, entitled "System for Improving Speech Quality and Intelligibility", the original spectrum 90 may be blended with the harmonic-extended spectrum 104. This may result in a final signal containing not only extended high-frequency harmonics (e.g. above 3.4 kHz), but also reconstructed harmonics that were masked by background noise.

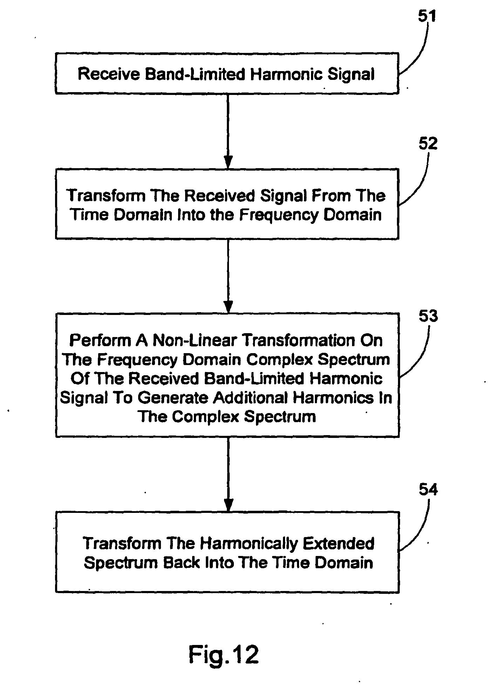

Based on the above discussion, a flowchart describing a method for extending the bandwidth of a band-limited harmonic signal is shown in FIG. 12. The first step S 1 is to receive a time based bandwidth limited harmonic signal. The signal may be for example a voice signal received over a wireless network. The second step S2 is to transform the received time domain signal into the frequency domain, to obtain the frequency spectrum of the received signal. The transform may be performed via an FFT, a Discrete Fourier Transform (DFT); a Discrete Cosine Transform (DCT); a digital filter bank; wavelet transform, or some other method for converting a digitally sampled time domain signal into the frequency domain. In step S3 a non-linear transformation is performed on the complex spectrum. As described above, the non-linear transformation in the frequency domain may include linear convolution of the complex spectrum of the transformed signal with itself, linear convolution of the complex spectrum or a portion of the complex spectrum with a portion of itself, convolution of the complex spectrum with the mirrored complex conjugate of itself, convolution of a first weighted version of the complex spectrum with a second weighted version of the complex spectrum, or some other non-linear frequency domain transformation that will generate the desired harmonics. The final step S4 is to transform the spectrum, including the newly created harmonics, back into the time domain. This may be accomplished by Inverse FFT, Inverse Discrete Fourier Transform (IDFT); Inverse Cosine Transform (IDCT); a digital filter bank; or inverse wavelet transform or some other method for converting a frequency domain signal back into the time domain. Preferably, the reverse transformation back into the time domain will be accomplished via the inverse of the transform originally used to transform the time domain signal into the frequency domain.

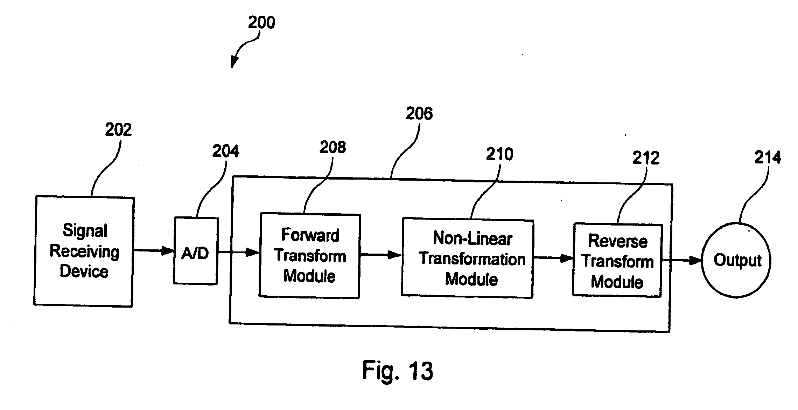

FIG. 13 shows a block diagram of a system 200 for extending the harmonic content of a band-limited harmonic signal. The system 200 includes a signal receiving device 202. The signal receiving device 202 may be a microphone, a wireless telephone, an audio recording device, or any other device capable of receiving or producing an audio signal. The audio signal output by the signal receiving device 202 may be either analog or digital. If the received signal is analog an A/D converter 204 may be provided to convert the received analog audio signal into a digital audio signal. Otherwise, the A/D converter 204 may be omitted. The digital audio signal is input to an harmonic extender 206. The harmonic extender 206 includes a forward transform module 208 for transforming the received audio signal into the frequency domain. The forward transform module 208 may employ an FFT algorithm, a Discrete Fourier Transform (DFT); a Discrete Cosine Transform (DCT); a digital filter bank; or a wavelet transform, or some other mechanism for transforming the time domain audio signal into the frequency domain.

The harmonic extender 206 further includes a non-linear transform module 210. The harmonic generation module 210 performs a non-linear transformation on the complex spectrum of the received audio signal which is output from forward transform module 208. The non-linear transformation may include linear convolution of the complex spectrum of the transformed signal with itself; linear convolution of the complex spectrum or a portion of the complex spectrum with a portion of itself; convolution of the complex spectrum with the mirrored complex conjugate of itself; convolution of a first weighted version of the complex spectrum with a second weighted version of the complex spectrum; or some other non-linear frequency domain transformation that will generate the desired harmonics.

Once the additional harmonics have been generated, an inverse, or reverse transform module 212 transforms the harmonically extended spectrum back into the time domain. The reverse transform module 212 may employ an inverse FFT algorithm, an Inverse Discrete Fourier Transform (IDFT); an Inverse Digital Cosine Transform (IDCT); a digital filter bank; or a wavelet transform or some other mechanism for transforming the complex spectrum of the harmonically extended signal back into the time domain. Preferably, the reverse transform module 212 will employ the inverse of the transform employed by the forward transform module 208. The reverse transform module 212 outputs a time domain signal 214 which includes harmonics in frequencies outside the limited frequency band of the original signal.

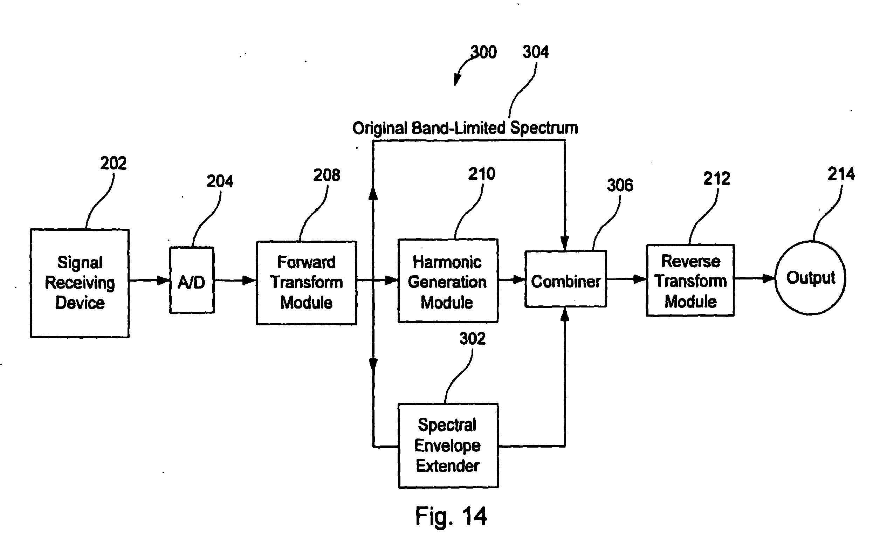

FIG. 14 shows a block diagram of a system 300 for extending the harmonic content and spectral envelope of a band-limited harmonic and combining the extended signal with the original band-limited signal. Such a system is also described in the co-pending U.S. Patent Application Serial No. 11/110,556, entitled "System for Improving Speech Quality and Intelligibility". The combiner module 306 blends the original band-limited spectrum 304 with the output from the harmonic generation module 210 and the output from the spectral envelope extender 302. The spectral envelope extender 302 ensures the spectral envelope of the harmonic generator's output 210 will be complimentary to that of the original band-limited spectrum 304. Therefore, the final output signal 308 may have improved bandwidth, quality and intelligibility compared to the band-limited received input signal 202.

While various embodiments of the invention have been described, it will be apparent to those of ordinary skill in the art that many more embodiments and implementations are possible within the scope of the invention. Accordingly, the invention is not to be restricted except in light of the attached claims and their equivalents.

**Claims**

1.  A method of extending harmonics of a band-limited harmonic signal, the method comprising:

    transforming a band-limited harmonic signal from the time domain to the frequency domain (52) to obtain a complex spectrum of the band-limited harmonic signal;
    performing a non-linear transformation on the complex spectrum of the band-limited harmonic signal in the frequency domain (53) to extend harmonic content of the band-limited harmonic signal to frequencies outside the limited frequency band of the band-limited harmonic signal; and
    inverse transforming the extended complex spectrum of the band-limited harmonic signal back into the time domain (54);
    **characterized in that**
    step of performing a non-linear transformation on the complex spectrum of the band-limited harmonic signal (53) comprises performing a linear convolution on the complex spectrum of the band-limited harmonics signal with itself.

2.  The method of Claim 1 wherein the step of transforming a band-limited harmonic signal from the time domain to the frequency domain (52) comprises performing a Fast Fourrier Transform (FFT) on the band-limited harmonics signal.

3. The method of Claim 1 wherein the linear convolution is performed according to the formula

$$Y(k) = X(k) * X(k) \qquad k = 0 \dots N/2$$

where * denotes a linear convolution operation, k is the frequency index and N is the length of the FFT used in transforming the band-limited harmonic signal from the time domain to the frequency domain.

4. The method of Claim 2 wherein the step of performing a non-linear transformation on the complex spectrum of the band-limited harmonic signal (53) comprises performing a linear convolution on the complex spectrum of the band-limited harmonic signal with a mirrored complex conjugate of the complex spectrum of the band-limited harmonic signal.

5. The method of Claim 2 wherein the step of performing a non-linear transformation on the complex spectrum of the band-limited harmonic signal (53) comprises performing a linear convolution on the spectrum of the band-limited harmonic signal weighted by a first weighting factor and the complex spectrum of the band-limited harmonic signal weighted by a second weighting factor.

6. The method of Claim 2 wherein the step of performing a non-linear transformation on the complex spectrum of the band-limited harmonic signal (52) comprises performing a linear convolution of a portion of the complex spectrum of the band-limited harmonic signal with a portion of the complex spectrum of the band-limited harmonic signal.

7. The method of Claim 1 wherein the step of transforming a band-limited harmonic signal from the time domain to the frequency domain (52) comprises employing one of: a Discrete Fourrier Transform (DFT); a Discrete Cosine Transform (DCT); a filter bank; or a wavelet transform.

8. A system for extending harmonics of a band-limited harmonic signal, the system comprising:

   means (202) for receiving a band-limited harmonic signal; and
   a signal processor having a forward transform module (208) for transforming the received band-limited harmonic signal from the time domain to the frequency domain to generate a complex spectrum of the band-limited signal; and
   a harmonic generation module (210) for performing a non-linear transformation of the complex spectrum of the band-limited signal in the frequency domain comprising performing a linear convolution on the complex spectrum of the band-limited harmonics signal with itself to create a harmonically extended spectrum of the band-limited harmonics signal; and
   a reverse transform module (212) for transforming the harmonically extended spectrum of the band-limited harmonics signal back to the time domain.

9. The system of Claim 8 wherein the forward transform employed is one of a Fast Fourier Transform (FFT); the Discrete Fourier transform (DFT); a Discrete Cosine Transform (DCT); a digital filter bank; or a wavelet transforms to transform the band-limited harmonic signal into the frequency domain.

10. The system of Claim 8 wherein the linear convolution is performed on the complex spectrum of the band-limited harmonics signal with itself.

11. The system of Claim 8 wherein the linear convolution is performed on the complex spectrum of the band-limited harmonic signal in the mirrored complex conjugate of the complex spectrum of the band-limited harmonic signal.

12. The system of Claim 8 wherein the linear convolution is performed on the complex spectrum of the band-limited harmonics signal weighted by a first weighting factor, with the complex spectrum of the band-limited harmonic signal weighted by a second weighting factor.

13. The system of Claim 8 further comprising:

   a spectral envelope extender module (302) to ensure the spectral envelope of the extended harmonics is complimentary to that of the original band-limited signal; and

a combiner module (306) to combine the harmonic extended spectrum with the original band-limited spectrum.

14. The system of Claim 13 wherein the forward transform employed is one of a Fast Fourier Transform (FFT); the Discrete Fourier transform (DFT); a Discrete Cosine Transform (DCT); a digital filter bank; or a wavelet transforms to transform the band-limited harmonic signal into the frequency domain.

15. The system of Claim 13 wherein the non-linear transformation module employs linear convolution in the frequency domain to create the harmonically extended spectrum of the band-limited harmonic signal.

16. The system of Claim 15 wherein the linear convolution is performed on the complex spectrum of the band-limited harmonics signal with itself.

17. The system of Claim 15 wherein the linear convolution is performed on the complex spectrum of the band-limited harmonic signal in the mirrored complex conjugate of the complex spectrum of the band-limited harmonic signal.

18. The system of Claim 15 wherein the linear convolution is performed on the complex spectrum of the band-limited harmonics signal weighted by a first weighting factor, with the complex spectrum of the band-limited harmonic signal weighted by a second weighting factor.

**Patentansprüche**

1. Verfahren zum Erweitern von Harmonischen eines bandbegrenzten harmonischen Signals, wobei das Verfahren umfasst:

   Transformieren eines bandbegrenzten harmonischen Signals von der Zeitdomäne in die Frequenzdomäne (52) zur Ermittlung eines komplexen Spektrums des bandbegrenzten harmonischen Signals;
   Durchführen einer nichtlinearen Transformation an dem komplexen Spektrum des bandbegrenzten harmonischen Signals in der Frequenzdomäne (53) zur Erweiterung des harmonischen Gehaltes des bandbegrenzten harmonischen Signals auf Frequenzen außerhalb des begrenzten Frequenzbandes des bandbegrenzten harmonischen Signals; und
   Umkehrtransformieren des erweiterten komplexen Spektrums des bandbegrenzten harmonischen Signals zurück in die Zeitdomäne (54);

   **dadurch gekennzeichnet, dass**
   der Schritt des Durchführens einer nichtlinearen Transformation an dem komplexen Spektrum des bandbegrenzten harmonischen Signals (53) ein Durchführen einer linearen Faltung an dem komplexen Spektrum des bandbegrenzten harmonischen Signals mit sich selbst umfasst.

2. Verfahren nach Anspruch 1, wobei der Schritt des Transformierens eines bandbegrenzten harmonischen Signals von der Zeitdomäne in die Frequenzdomäne (52) ein Durchführen einer schnellen Fourier-Transformation (Fast Fourier Transform FFT) an dem bandbegrenzten harmonischen Signal umfasst.

3. Verfahren nach Anspruch 1, wobei die lineare Faltung entsprechend der Formel $Y(k) = X(k) *X(k)$ mit $k = 0, ..., N/2$ durchgeführt wird, mit * zur Bezeichnung des Vorganges einer linearen Faltung, $k$ als Frequenzindex und $N$ als Länge der FFT, die beim Transformieren des bandbegrenzten harmonischen Signals von der Zeitdomäne in die Frequenzdomäne verwendet wird.

4. Verfahren nach Anspruch 2, wobei der Schritt des Durchführens einer nichtlinearen Transformation an dem komplexen Spektrum des bandbegrenzten harmonischen Signals (53) ein Durchführen einer linearen Faltung an dem komplexen Spektrum des bandbegrenzten harmonischen Signals mit einer gespiegelten Komplexkonjugierten des komplexen Spektrums des bandbegrenzten harmonischen Signals umfasst.

5. Verfahren nach Anspruch 2, wobei der Schritt des Durchführens einer nichtlinearen Transformation an dem komplexen Spektrum des bandbegrenzten harmonischen Signals (53) ein Durchführen einer linearen Faltung an dem Spektrum des bandbegrenzten harmonischen Signals bei Gewichtung durch einen ersten Gewichtungsfaktor und dem komplexen Spektrum des bandbegrenzten harmonischen Signals bei Gewichtung durch einen zweiten Gewichtungsfaktor umfasst.

**6.** Verfahren nach Anspruch 2, wobei der Schritt des Durchführens einer nichtlinearen Transformation an dem komplexen Spektrum des bandbegrenzten harmonischen Signals (53) ein Durchführen einer linearen Faltung eines Abschnittes des komplexen Spektrums des bandbegrenzten harmonischen Signals mit einem Abschnitt des komplexen Spektrums des bandbegrenzten harmonischen Signals umfasst.

**7.** Verfahren nach Anspruch 1, wobei der Schritt des Durchführens eines bandbegrenzten harmonischen Signals von der Zeitdomäne in die Frequenzdomäne (52) ein Anwenden entweder einer diskreten Fourier-Transformation (Discrete Fourier Transform DFT) oder einer diskreten Kosinustransformation (Discrete Cosine Transform DCT) oder einer Filterbank oder einer Wavelet-Transformation umfasst.

**8.** System zum Erweitern von Harmonischen eines bandbegrenzten harmonischen Signals, wobei das System umfasst:

Mittel (202) zum Empfangen eines bandbegrenzten harmonischen Signals; und
einen Signalprozessor mit einem Vorwärtstransformationsmodul (208) zum Transformieren des empfangenen bandbegrenzten harmonischen Signals von der Zeitdomäne in die Frequenzdomäne zur Erzeugung eines komplexen Spektrums des bandbegrenzten Signals; und
ein Harmonischenerzeugungsmodul (210) zum Durchführen einer nichtlinearen Transformation des komplexen Spektrums des bandbegrenzten Signals in der Frequenzdomäne, umfassend ein Durchführen einer linearen Faltung an dem komplexen Spektrum des bandbegrenzten harmonischen Signals mit sich selbst zur Erzeugung eines harmonisch erweiterten Spektrums des bandbegrenzten harmonischen Signals; und
ein Umkehrtransformationsmodul (212) zum Transformieren des harmonisch erweiterten Spektrums des bandbegrenzten harmonischen Signals zurück in die Zeitdomäne.

**9.** System nach Anspruch 8, wobei die angewandte Vorwärtstransformation entweder eine schnelle Fourier-Transformation (Fast Fourier Transform FFT) oder die diskrete Fourier-Transformation (Discrete Fourier Transform DFT) oder eine diskrete Kosinustransformation (Discrete Cosine Transform DCT) oder eine digitale Filterbank oder eine Wavelet-Transformation bzw. Wavelet-Transformationen zur Transformation des bandbegrenzten harmonischen Signals in die Frequenzdomäne ist.

**10.** System nach Anspruch 8, wobei die lineare Faltung an dem komplexen Spektrum des bandbegrenzten harmonischen Signals mit sich selbst durchgeführt wird.

**11.** System nach Anspruch 8, wobei die lineare Faltung an dem komplexen Spektrum des bandbegrenzten harmonischen Signals in der gespiegelten Komplexkonjugierten des komplexen Spektrums des bandbegrenzten harmonischen Signals durchgeführt wird.

**12.** System nach Anspruch 8, wobei die lineare Faltung an dem komplexen Spektrum des bandbegrenzten harmonischen Signals bei Gewichtung durch einen ersten Gewichtungsfaktor mit dem komplexen Spektrum des bandbegrenzten harmonischen Signals bei Gewichtung durch einen zweiten Gewichtungsfaktor durchgeführt wird.

**13.** System nach Anspruch 8, des Weiteren umfassend:

ein Spektralhüllenerweiterermodul (302) zur Sicherstellung, dass die Spektralhülle der erweiterten Harmonischen komplementär zu derjenigen des ursprünglichen bandbegrenzten Signals ist; und
ein Kombinierermodul (306) zum Kombinieren des harmonischen erweiterten Spektrums mit dem ursprünglichen bandbegrenzten Spektrum.

**14.** System nach Anspruch 13, wobei die angewandte Vorwärtstransformation entweder eine schnelle Fourier-Transformation (Fast Fourier Transform FFT) oder die diskrete Fourier-Transformation (Discrete Fourier Transform DFT) oder eine diskrete Kosinustransformation (Discrete Cosine Transform DCT) oder eine digitale Filterbank oder eine Wavelet-Transformation bzw. Wavelet-Transformationen zur Transformation des bandbegrenzten harmonischen Signals in die Frequenzdomäne ist.

**15.** System nach Anspruch 13, wobei das Nichtlineartransformationsmodul eine lineare Faltung in der Frequenzdomäne zur Erzeugung des harmonisch erweiterten Spektrums des bandbegrenzten harmonischen Signals anwendet.

**16.** System nach Anspruch 15, wobei die lineare Faltung an dem komplexen Spektrum des bandbegrenzten harmonischen Signals mit sich selbst durchgeführt wird.

**17.** System nach Anspruch 15, wobei die lineare Faltung an dem komplexen Spektrum des bandbegrenzten harmonischen Signals in der gespiegelten Komplexkonjugierten des komplexen Spektrums des bandbegrenzten harmonischen Signals durchgeführt wird.

**18.** System nach Anspruch 15, wobei die lineare Faltung an dem komplexen Spektrum des bandbegrenzten harmonischen Signals bei Gewichtung durch einen ersten Gewichtungsfaktor mit dem komplexen Spektrum des bandbegrenzten harmonischen Signals bei Gewichtung durch einen zweiten Gewichtungsfaktor durchgeführt wird.

**Revendications**

**1.** Procédé d'extension d'harmoniques d'un signal harmonique à largeur de bande limitée, le procédé comprenant :

la transformation d'un signal harmonique à largeur de bande limitée du domaine temporel au domaine fréquentiel (52) pour obtenir un spectre complexe du signal harmonique à largeur de bande limitée ;
la mise en oeuvre d'une transformation non linéaire sur le spectre complexe du signal harmonique à largeur de bande limitée dans le domaine fréquentiel (53) pour étendre le contenu harmonique du signal harmonique à largeur de bande limitée à des fréquences externes à la bande de fréquences limitée du signal harmonique à largeur de bande limitée ; et
la transformation inverse du spectre complexe étendu du signal harmonique à largeur de bande limitée pour revenir dans le domaine temporel (54) ;

**caractérisé**
**en ce que** l'étape consistant à mettre en oeuvre une transformation non linéaire sur le spectre complexe du signal harmonique à largeur de bande limitée (53) comprend la mise en oeuvre d'une convolution linéaire sur le spectre complexe du signal harmonique à largeur de bande limitée avec lui-même.

**2.** Procédé selon la revendication 1, dans lequel l'étape de transformation d'un signal harmonique à largeur de bande limitée du domaine temporel au domaine fréquentiel (52) comprend la mise en oeuvre d'une transformée de Fourier rapide (FFT) sur le signal harmonique à largeur de bande limitée.

**3.** Procédé selon la revendication 1, dans lequel la convolution linéaire est mise en oeuvre selon la formule

$$Y(k) = X(k) * X(k) \qquad k = 0 \ldots N/2$$

où * indique une opération de convolution linéaire, k est l'index de fréquence et N est la longueur de la FFT utilisée pour transformer le signal harmonique à largeur de bande limitée du domaine temporel au domaine fréquentiel.

**4.** Procédé selon la revendication 2, dans lequel l'étape de mise en oeuvre d'une transformation non linéaire sur le spectre complexe du signal harmonique à largeur de bande limitée (53) comprend la mise en oeuvre d'une convolution linéaire sur le spectre complexe du signal harmonique à largeur de bande limitée avec un conjugué complexe en miroir du spectre complexe du signal harmonique à largeur de bande limitée.

**5.** Procédé selon la revendication 2, dans lequel l'étape de mise en oeuvre d'une transformation non linéaire sur le spectre complexe du signal harmonique à largeur de bande limitée (53) comprend la mise en oeuvre d'une convolution linéaire sur le spectre du signal harmonique à largeur de bande limitée pondéré par un premier facteur de pondération avec le spectre complexe du signal harmonique à largeur de bande limitée pondéré par un second facteur de pondération.

**6.** Procédé selon la revendication 2, dans lequel l'étape de mise en oeuvre d'une transformation non linéaire du spectre complexe du signal harmonique à largeur de bande limitée (52) comprend la mise en oeuvre d'une convolution linéaire d'une partie du spectre complexe du signal harmonique à largeur de bande limitée avec une partie du spectre complexe du signal harmonique à largeur de bande limitée.

**7.** Procédé selon la revendication 1, dans lequel l'étape de transformation d'un signal harmonique à largeur de bande limitée du domaine temporel au domaine fréquentiel (52) comprend l'une des opérations suivantes: transformée de Fourier discrète (Discrete Fourier Transform - DFT) ; transformée en cosinus discrète (Discrete Cosine Transform - DCT) ; filtration par banc de filtres ; transformée en ondelettes.

8. Système d'extension d'harmoniques d'un signal harmonique à largeur de bande limitée, le système comprenant :

un moyen (202) pour recevoir un signal harmonique à largeur de bande limitée ; et
un processeur de signaux comprenant un module de transformée directe (208) pour la transformation du signal harmonique à largeur de bande limitée reçu du domaine temporel au domaine fréquentiel afin de générer un spectre complexe du signal à largeur de bande limitée ; et
un module de génération harmonique (210) pour effectuer une transformation non linéaire du spectre complexe du signal à largeur de bande limitée dans le domaine fréquentiel, comprenant la mise en oeuvre d'une convolution linéaire sur le spectre complexe du signal harmonique à largeur de bande limitée avec lui-même pour créer un spectre étendu harmoniquement du signal harmonique à largeur de bande limitée ; et
un module de transformée inverse (212) pour transformer le spectre complexe étendu harmoniquement du signal harmonique à largeur de bande limitée pour revenir dans le domaine temporel.

9. Système selon la revendication 8 dans lequel la transformée directe employée correspond à l'une des opérations suivantes : transformée de Fourier rapide (Fast Fourier Transform - FFT) ; transformée de Fourier discrète (Discrete Fourier Transform - DFT) ; transformée en cosinus discrète (Discrete Cosine Transform - DCT) ; filtration par banc de filtres numériques ; transformée en ondelettes pour transformer le signal harmonique à largeur de bande limitée dans le domaine fréquentiel.

10. Système selon la revendication 8 dans lequel la convolution linéaire est effectuée sur le spectre complexe du signal harmonique à largeur de bande limitée avec lui-même.

11. Système selon la revendication 8 dans lequel la convolution linéaire est effectuée sur le spectre complexe du signal harmonique à largeur de bande limitée dans le conjugué complexe en miroir du spectre complexe du signal harmonique à largeur de bande limitée.

12. Système selon la revendication 8 dans lequel la convolution linéaire est effectuée sur le spectre complexe du signal harmonique à largeur de bande limitée pondéré par un premier facteur de pondération avec le spectre complexe du signal harmonique à largeur de bande limitée pondéré par un second facteur de pondération.

13. Système selon la revendication 8 comprenant en outre :

un module d'extension d'enveloppe spectrale (302) pour assurer que l'enveloppe spectrale des harmoniques étendues est complémentaire à celle du signal à largeur de bande limitée original ; et un module combinatoire (306) pour combiner le spectre harmonique étendu avec le spectre à largeur de bande limitée original.

14. Système selon la revendication 13 dans lequel la transformée directe employée correspond à l'une des opérations suivantes :

transformée de Fourier rapide (Fast Fourier Transform - FFT) ; transformée de Fourier discrète (Discrete Fourier Transform - DFT) ; transformée en cosinus discrète (Discrete Cosine Transform - DCT) ; filtration par banc de filtres numériques ; transformée en ondelettes pour transformer le signal harmonique à largeur de bande limitée dans le domaine fréquentiel.

15. Système selon la revendication 13 dans lequel le module de transformation non linéaire emploie une convolution linéaire dans le domaine fréquentiel pour créer le spectre étendu harmoniquement du signal harmonique à largeur de bande limitée.

16. Système selon la revendication 15 dans lequel la convolution linéaire est effectuée sur le spectre complexe du signal harmonique à largeur de bande limitée avec lui-même.

17. Système selon la revendication 15 dans lequel la convolution linéaire est effectuée sur le spectre complexe du signal harmonique à largeur de bande limitée dans le conjugué complexe en miroir du spectre complexe du signal harmonique à largeur de bande limitée.

**18.** Système selon la revendication 15 dans lequel la convolution linéaire est effectuée sur le spectre complexe du signal harmonique à largeur de bande limitée pondéré par un premier facteur de pondération avec le spectre complexe du signal harmonique à largeur de bande limitée pondéré par un second facteur de pondération.

Fig. 1

Fig. 2

Fig. 3

Fig. 4

Fig. 5

Fig. 6

Fig. 7

Fig. 8

Fig. 9

Fig. 10

Fig. 11

51

Receive Band-Limited Harmonic Signal

52

Transform The Received Signal From The Time Domain Into the Frequency Domain

53

Perform A Non-Linear Transformation On The Frequency Domain Complex Spectrum Of The Received Band-Limited Harmonic Signal To Generate Additional Harmonics In The Complex Spectrum

54

Transform The Harmonically Extended Spectrum Back Into The Time Domain

Fig.12

**Fig. 13**

200

202 — Signal Receiving Device

204 — A/D

206

208 — Forward Transform Module

210 — Non-Linear Transformation Module

212 — Reverse Transform Module

214 — Output

Fig. 14

EP 1 739 658 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 110556 A
- EP 0497050 A1
- US 6504935 B1
- WO 0118960 A
- US 2003050786 A1
- WO 9806090 A